# EUROPÄISCHE PATENTSCHRIFT

(11) **EP 2 075 430 B1**
(45) Veröffentlichungstag und Bekanntmachung des Hinweises auf die Patenterteilung: **28.07.2010**
(21) Anmeldenummer: 08171415.6
(22) Anmeldetag: 12.12.2008
(51) Int. Cl.: F01N 13/10, F01N 13/18, F01N 13/14

(54) **Abgassammler**
Exhaust gas collector
Collecteur de gaz d'échappement

(30) Priorität: 24.12.2007 DE 102007062661
(43) Veröffentlichungstag der Anmeldung: 01.07.2009
(73) Patentinhaber: J. Eberspächer GmbH & Co. KG, 73730 Esslingen (DE)
(72) Erfinder: Müller, Frank, 73732, Esslingen (DE)
(74) Vertreter: BRP Renaud & Partner

(56) Entgegenhaltungen:
- EP-A- 0 664 385
- EP-A- 1 225 314
- EP-A- 1 291 500
- JP-A- 2 055 823

## Beschreibung

Die vorliegende Erfindung betrifft einen Abgassammler für eine Brennkraftmaschine, insbesondere in einem Kraftfahrzeug, mit den Merkmalen des Oberbegriffs des Anspruchs 1. Die Erfindung betrifft außerdem eine mit einem derartigen Abgassammler ausgestattete Abgasanlage.

Bei einer Brennkraftmaschine dient ein Abgassammler dazu, das an den einzelnen Zylindern aus einem Motorblock, insbesondere aus einem Zylinderkopf, der Brennkraftmaschine austretende Abgas zusammenzuführen beziehungsweise zu sammeln, um es einem gemeinsamen Abgasrohr zuzuführen. Hierzu wird ein derartiger Abgassammler direkt an den Zylinderkopf angeflanscht. Insoweit bildet ein derartiger Abgassammler, der auch als Abgaskrümmer bezeichnet werden kann, den Einlassbereich eines Abgasstrangs einer Abgasanlage.

Bei Brennkraftmaschinen, die im Betrieb höhere Abgastemperaturen erzeugen, können luftspaltisolierte Abgassammler zum Einsatz kommen, bei denen ein äußerer Schalenkörper zumindest einen inneren Schalenkörper unter Ausbildung eines thermisch isolierenden Luftspalts umhüllt. Ferner können moderne Brennkraftmaschinen zur Leistungssteigerung mit einem Abgasturbolader ausgestattet sein. Ein derartiger Abgasturbolader kann mit seinem turbinenseitigen Einlass unmittelbar an den Abgassammler angeflanscht sein. Bei bestimmten Motor-Typen können sogenannte Twin-Scroll-Abgasturbolader zum Einsatz kommen, die sich dadurch auszeichnen, dass vom abgasseitigen Einlass zwei separate Einlasspfade zu einem gemeinsamen Turbinenrad des Abgasturboladers führen. Durch gezieltes Aufteilen der bei den einzelnen Zylindern zyklisch anfallenden Abgasströme auf die beiden Einlasspfade kann das Ansprechverhalten bei einem solchen Twin-Scroll-Turbolader verbessert werden.

Aus der JP 02-055823 A ist ein Abgassammler für eine Abgasanlage einer Brennkraftmaschine bekannt, der zwei innere Schalenkörper und einen äußeren Schalenkörper aufweist. Die inneren Schalenkörper verbinden jeweils mehrere Einlassöffnungen mit einer Auslassöffnung. Der äußere Schalenkörper umhüllt einen Aufnahmeraum, in dem die beiden inneren Schalenkörper angeordnet sind. Ferner ist innerhalb des äußeren Schalenkörpers eine Trennwand vorgesehen, die den Aufnahmeraum in zwei Teilräume unterteilt, wobei in jedem der Teilräume einer der beiden inneren Schalenkörper angeordnet ist. Beim bekannten Abgassammler liegen die beiden inneren Schalenkörper unmittelbar an der Trennwand an. Die Trennwand ist dabei im Bereich der Auslassöffnung angeordnet, so dass sich der Abgassammler für eine Verwendung bei einem Twin-Scroll-Abgasturbolader eignet.

Aus der EP 1 225 314 A2 und aus der EP 1 291 500 A2 sind weitere Abgassammler bekannt, die sich für eine Verwendung mit einem Twin-Scroll-Abgasturbolader eignen.

Aus der EP 0 664 385 A1 ist ein Beispiel für einen Twin-Scroll-Abgasturbolader bekannt.

Die vorliegende Erfindung beschäftigt sich mit dem Problem, für einen Abgassammler beziehungsweise für eine damit ausgestattete Abgasanlage eine verbesserte Ausführungsform anzugeben, die sich insbesondere dadurch auszeichnet, dass sich für den Fall, dass der Abgassammler zusammen mit einem Turbolader, insbesondere mit einem Twin-Scroll-Turbolader, verwendet wird, eine verbesserte Aufladung der damit ausgestatteten Brennkraftmaschine, insbesondere in Form eines verbesserten Ansprechverhaltens, ermöglicht.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, bei einem Abgassammler, der in einem gemeinsamen äußeren Schalenkörper einen Aufnahmeraum zur Aufnahme von zwei separaten inneren Schalenkörpern aufweist, den Aufnahmeraum mit Hilfe einer Trennwand in zwei Teilräume zu unterteilen, die jeweils einen der inneren Schalenkörper aufnehmen. Die Trennwand bewirkt eine relativ effektive Entkopplung der beiden Teilräume hinsichtlich Druckpulsationen. Hierzu ist die Trennwand, z.B. ein Blechformteil, im äußeren Schalenkörper so angeordnet, dass sie die beiden Teilräume mehr oder weniger gasdicht voneinander trennt oder zumindest einen Gasaustausch zwischen den beiden Teilräumen behindert. Es hat sich gezeigt, dass die Ausbildung der Teilräume im äußeren Schalenkörper die Wechselwirkungen zwischen den an sich unabhängigen Gasströmungen in den beiden inneren Schalenkörpern reduziert. Derartige Wechselwirkungen können durch Leckagen auftreten, durch die Abgas von dem einen inneren Schalenkörper in den äußeren Schalenkörper gelangt und darüber in den anderen inneren Schalenkörper und/oder zur Auslassseite des Abgassammlers gelangt. Die Trennwand im äußeren Schalenkörper kann somit die getrennte Abgasführung zum Einlass eines unmittelbar an den Abgassammler angeflanschten Turboladers verbessern, wobei sich insbesondere bei einem Twin-Scroll-Abgasturbolader eine signifikante Verbesserung des Ansprechverhaltens bei kleinen Drehzahlen der Brennkraftmaschine zeigt.

Erfindungsgemäß erstreckt sich die Trennwand bezüglich der beiden inneren Schalenkörper beabstandet. Insoweit kann die Trennwand das Prinzip der Luftspaltisolation realisieren.

Der äußere Schalenkörper kann für den Anschluss des Abgasturboladers einen Auslassbereich aufweisen. In diesem Auslassbereich enden Auslassabschnitte der beiden inneren Schalenkörper mit deren Auslassöffnungen. Hierdurch sind die inneren Schalenkörper mit ihren Auslassöffnungen direkt an die beiden Einlasspfade eines Twin-Scroll-Abgasturboladers anschließbar. Die Trennwand erstreckt sich nun vorzugsweise zwischen diesen Auslassabschnitten bis in den Auslassbereich hinein. Insbesondere kann die Trennwand dabei mit einem Anschlussbereich des Turboladers zusammenwirken, um die Trennung der beiden Teilräume hinsichtlich Gasaustausch und/oder hinsichtlich der Übertragung von Druckschwingungen zu verbessern.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine Draufsicht eines Abgassammlers,
- Fig. 2: eine Seitenansicht des Abgassammlers entsprechend einer Blickrichtung II in Fig. 1,
- Fig. 3: einen Längsschnitt des Abgassammlers entsprechend Schnittlinien III in Fig. 2,
- Fig. 4: eine teilweise geschnittene Ansicht entsprechend einer Blickrichtung IV in Fig. 2,
- Fig. 5: einen Längsschnitt entsprechend Schnittlinien V in Fig. 2,
- Fig. 6: einen Querschnitt entsprechend Schnittlinien VI in Fig. 5,
- Fig. 7: eine Ansicht entsprechend einer Blickrichtung VII in Fig. 5.

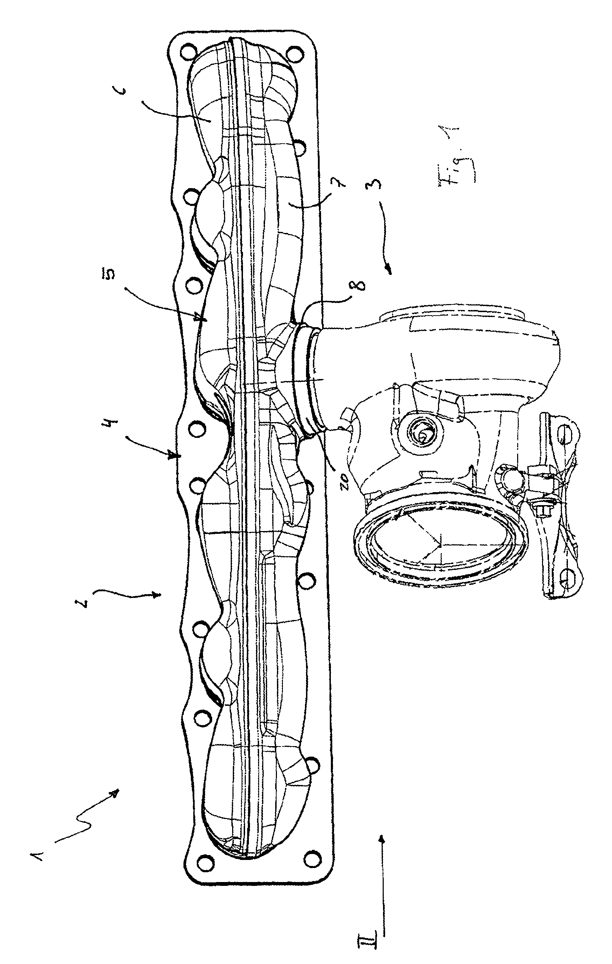

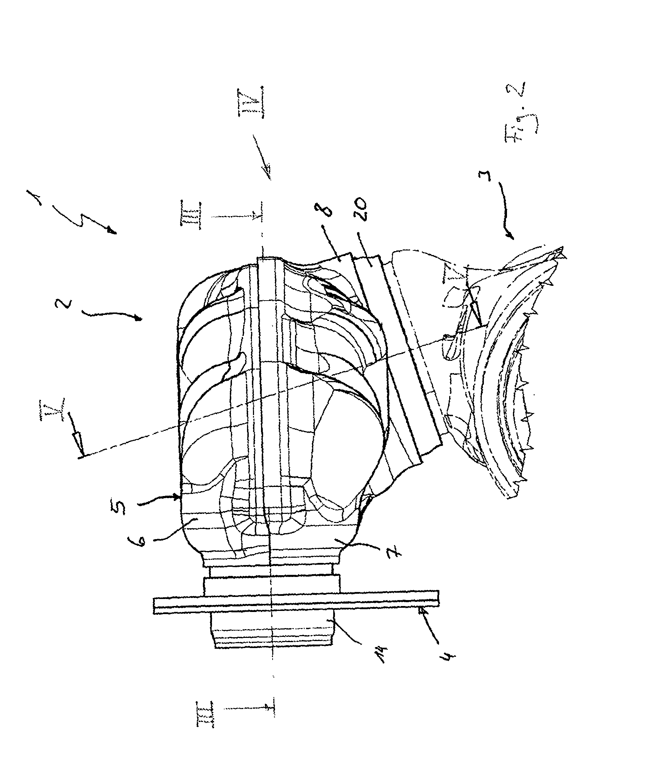

Entsprechend den Fig. 1 bis 3 kann eine nur teilweise dargestellte Abgasanlage 1 zumindest einen Abgassammler 2 und einen Abgasturbolader 3 aufweisen, der hier mit unterbrochenen Linien dargestellt ist. Die Abgasanlage 1 dient zum Abführen von Abgasen einer hier nicht dargestellten Brennkraftmaschine, die insbesondere in einem Kraftfahrzeug angeordnet sein kann. Der Abgassammler 2 bildet den Einlassbereich der Abgasanlage 1 und ist zur Montage an einem Zylinderkopf der Brennkraftmaschine vorgesehen. Hierzu weist der Abgassammler 2 einen Flansch 4 auf, mit dem der Abgassammler 2 am Zylinderkopf montierbar ist. Der Abgassammler 2 weist einen äußeren Schalenkörper 5 auf, der vorzugsweise aus zwei äußeren Schalen 6 und 7 zusammengebaut ist. Ferner weist der äußere Schalenkörper 5 einen Auslassbereich 8 auf, an dem der Turbolader 3 an den Abgassammler 2 angeschlossen ist.

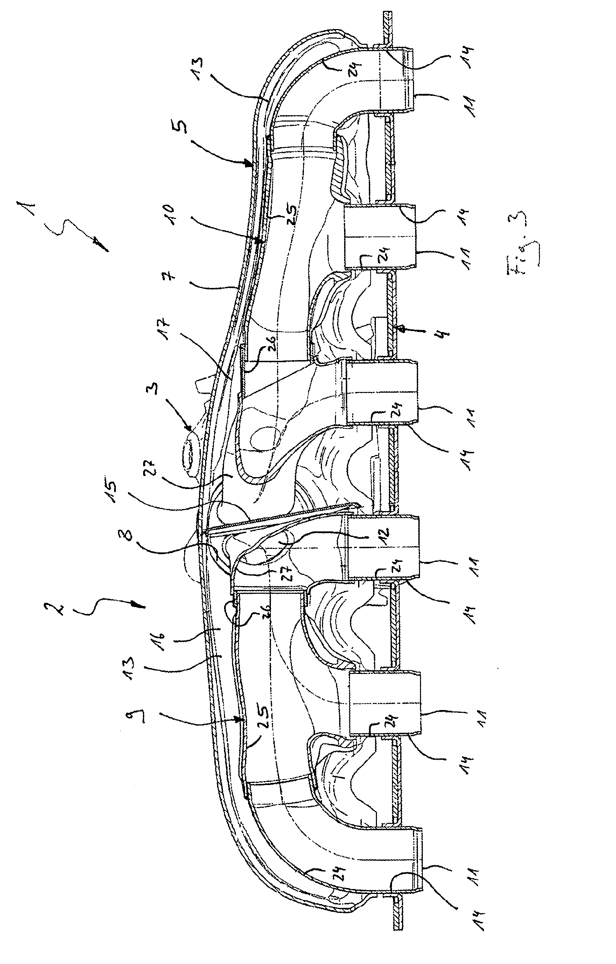

Entsprechend Fig. 3 weist der Abgassammler 2 zwei innere Schalenkörper 9 und 10 auf, die jeweils mehrere Einlassöffnungen 11 und jeweils eine Auslassöffnung 12 aufweisen. Der jeweilige innere Schalenkörper 9, 10 schafft eine kommunizierende Verbindung zwischen seinen Einlassöffnungen 11 und seiner Auslassöffnung 12. Jede Einlassöffnung 11 ist einem Zylinder der Brennkraftmaschine zugeordnet. Im gezeigten Beispiel ist der Abgassammler 2 somit für eine Verwendung an einem Reihen-Sechszylinder-Motor oder an einem V12-Motor vorgesehen. Die gezeigte Ausführungsform ist dabei ohne Beschränkung der Allgemeinheit. Insbesondere kann der Abgassammler 2 daher auch bei anderen Ausführungsformen für eine Verwendung bei einem Reihen-Vierzylinder-Motor oder bei einem V8-Motor oder bei einem Reihen-Achtzylinder-Motor ausgestaltet sein.

Der äußere Schalenkörper 5 umschließt einen Aufnahmeraum 13, in dem die beiden inneren Schalenkörper 9, 10 angeordnet sind. Im Beispiel ragen die inneren Schalenkörper 9, 10 lediglich im Bereich von Einlassabschnitten 14, die jeweils eine der Einlassöffnungen 11 aufweisen, aus dem Aufnahmeraum 13 bzw. aus dem äußeren Schalenkörper 5 heraus. Im gezeigten Beispiel ist der Abgassammler 2 als luftspaltisolierter Abgassammler 2 ausgestaltet. Dementsprechend umhüllt der äußere Schalenkörper 5 die beiden inneren Schalenkörper 9, 10 so, dass sich zwischen dem äußeren Schalenkörper 5 und den beiden inneren Schalenkörpern 9, 10 ein thermisch isolierender Luftspalt ausbilden kann. Im Beispiel ist der äußere Schalenkörper 5 nur im Bereich der Einlassabschnitte 14 an den inneren Schalenkörpern 9, 10 abgestützt.

Entsprechend den Fig. 3 bis 5 und 7 weist der Abgassammler 2 außerdem eine Trennwand 15 auf, die im äußeren Schalenkörper 5 so angeordnet ist, dass sie den Aufnahmeraum 13 in zwei Teilräume 16, 17 unterteilt. Die Trennwand 15 erstreckt sich dabei zwischen den beiden inneren Schalenkörpern 9, 10, so dass in jedem der beiden Teilräume 16, 17 jeweils einer der beiden inneren Schalenkörper 9, 10 aufgenommen ist. So ist gemäß Fig. 3 der links dargestellte innere Schalenkörper 9 im linken Teilraum 16 untergebracht, während der rechte innere Schalenkörper 10 im rechten Teilraum 17 angeordnet ist.

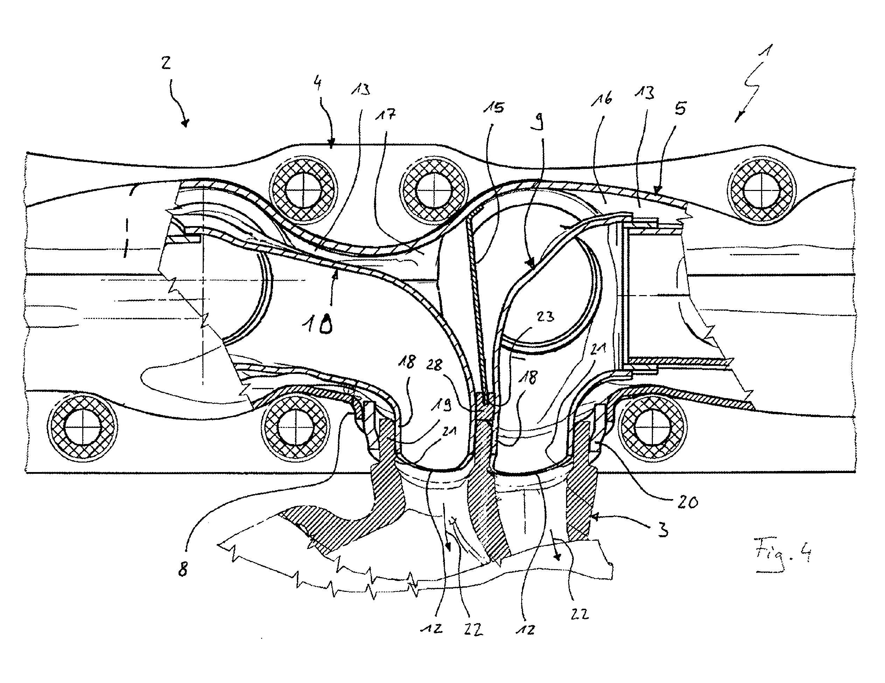

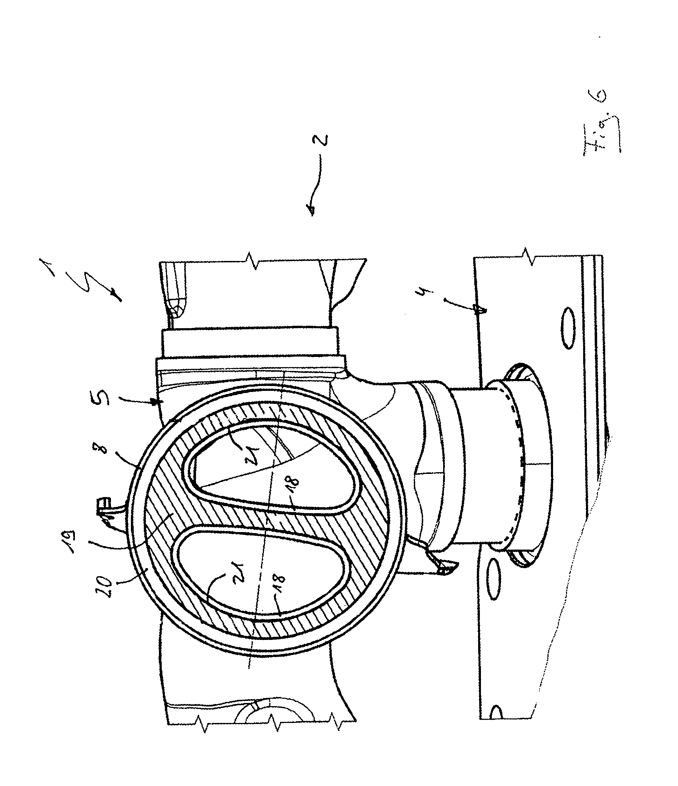

Entsprechend den Fig. 4 bis 7 besitzen die inneren Schalenkörper 9, 10 jeweils einen Auslassabschnitt 18, der die Auslassöffnung 12 des jeweiligen inneren Schalenkörpers 9, 10 aufweist. Die Auslassabschnitte 18 sind dabei so ausgeformt, dass sie mit den Auslassöffnungen 12 im Auslassbereich 8 des äußeren Schalenkörpers 5 enden. Erkennbar erstreckt sich nun die Trennwand 15 zwischen diesen Auslassabschnitten 18 bis in den Auslassbereich 8 des äußeren Schalenkörpers 5. Zweckmäßig ist die Trennwand 15 dabei von den beiden inneren Schalenkörpern 9, 10 beabstandet angeordnet. Hierdurch kann zwischen der Trennwand 15 und dem jeweiligen inneren Schalenkörper 9, 10 jeweils ein thermisch isolierender Luftspalt realisiert werden.

Die Trennwand 15 ist bezüglich der beiden äußeren Schalen 6, 7 zweckmäßig ein separates Bauteil, kann jedoch z.B. an einer der beiden Schalen 6, 7 befestigt sein, beispielweise durch eine Schweißverbindung. Hierdurch kann die Trennwand 15 beim Zusammenbau des Abgassammlers 2 vorab an einer der äußeren Schalen 6, 7 befestigt werden. Beim Zusammenbauen der beiden äußeren Schalen 6, 7 kann sich die Trennwand 15 dann an der jeweils anderen Schale 6, 7, z.B. über einen abgewinkelten Randbereich, insbesondere flächig abstützen, wodurch eine gewisse Dichtungswirkung zwischen den beiden Teilräumen 16, 17 realisierbar ist.

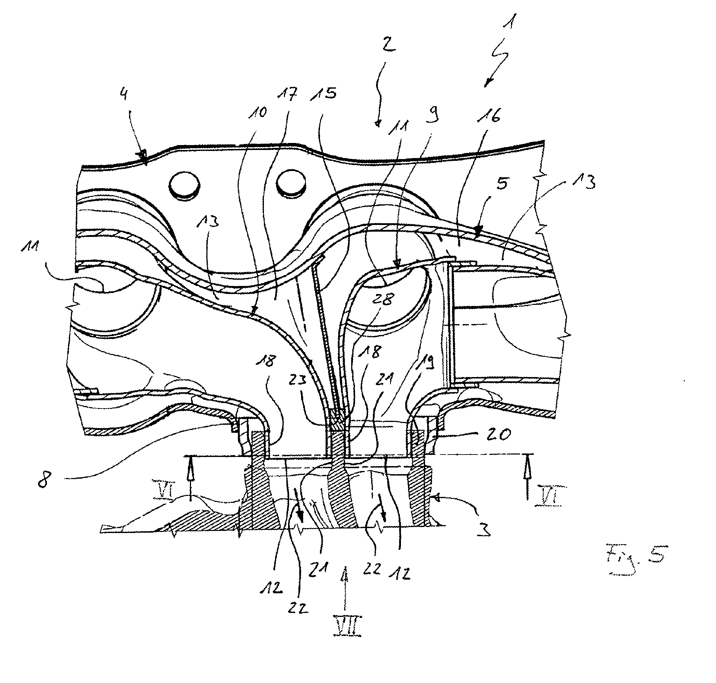

Vorzugsweise sind gemäß den Fig. 4 bis 7 die Auslassabschnitte 18 der beiden inneren Schalenkörper 9, 10 so ausgestaltet, dass die beiden Auslassöffnungen 12 im Auslassbereich 8 nebeneinander angeordnet sind, wobei sie außerdem zweckmäßig in einer gemeinsamen Ebene liegen können; letzteres geht beispielsweise aus Fig. 5 hervor. Für die Montage des Abgasturboladers 3 am Abgassammler 2 ist ein direkter Anschluss bevorzugt. Hierzu ist ein Einlassbereich 19 des Turboladers 3 direkt an den Auslassbereich 8 des äußeren Schalenkörpers 5 angeschlossen. Hierbei kann wie bei den gezeigten Ausführungsbeispielen ein Verbindungselement 20 zum Einsatz kommen, das bei den gezeigten Beispielen als Ringkörper ausgestaltet ist. Das Verbindungselement 20 kann im montierten Zustand einerseits mit dem Auslassbereich 8 des äußeren Schalenkörpers 8 verschweißt sein und dadurch eine Einstecköffnung für den Einlassbereich 19 des Turboladers 3 bilden. Andererseits kann das Verbindungselement 20 im montierten Zustand mit dem Einlassbereich 19 des Turboladers 3 verschweißt sein. Der Einlassbereich 19 des Turboladers 3 bildet zwei separate Stecköffnungen 21 für die beiden Auslassabschnitte 18 der beiden inneren Schalenkörper 9, 10. Die Einsteckbereiche 21 bilden dabei gleichzeitig Einlassöffnungen des Turboladers 3. Im montierten Zustand sind die beiden Auslassabschnitte 18 somit in die beiden Stecköffnungen 21 eingesteckt. Die Stecköffnungen 21 führen zu den beiden bereits weiter oben genannten Einlasspfaden 22, die hier durch Pfeile angedeutet sind und die separat zu einer hier nicht gezeigten Turbine des Turboladers 3 führen. Erst an der Turbine bzw. an jeweiligen Turbinenrad vereinigen sich die beiden bis dahin getrennt geführten Abgasströme.

Bei der hier gezeigten Ausführungsform stützt sich die Trennwand 15 zusätzlich am Einlassbereich 19 des Turboladers 3 ab. Insbesondere ist hier am Einlassbereich 19 eine Aufnahmenut 23 ausgebildet, in welche eine freie Endkante der Trennwand 15 eingesteckt ist. Hierdurch ist die Trennwand 15 in montiertem Zustand stabilisiert. Gleichzeitig kann dadurch die Dichtungswirkung der Trennwand 15 verbessert werden.

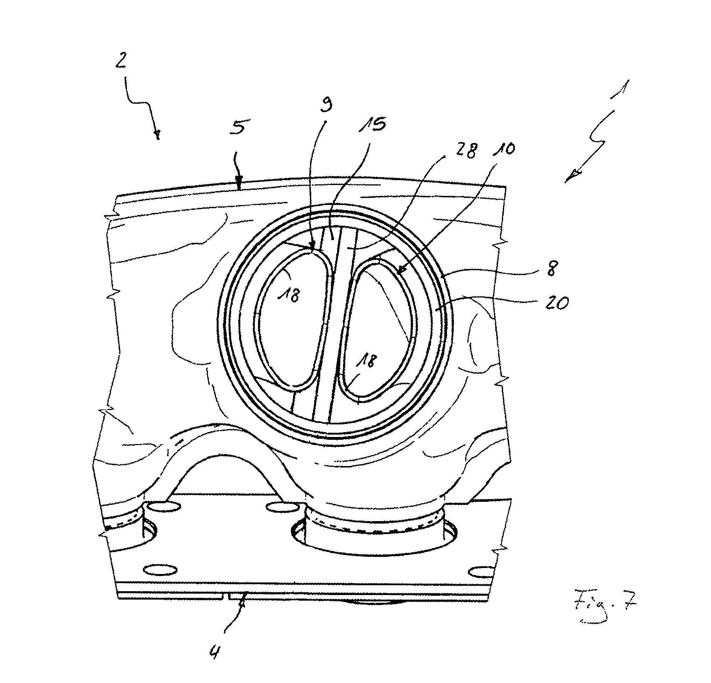

Die Aufnahmenut 23 kann dabei unmittelbar in die Stirnseite des Einlassbereichs 19 des Turboladers 3 eingearbeitet sein. Ebenso ist es möglich, die Aufnahmenut 23 wie in den Fig. 4 und 5 angedeutet in einem separaten Steg 28 auszubilden, an dem sich die beiden Auslassabschnitte 18 abstützen, siehe auch Fig. 7. Im montierten Zustand stützt sich der Steg 28 stirnseitig am Einlassbereich 19 des Turboladers 3 ab und kann somit beispielsweise die Einstecktiefe des Einlassbereichs 19 bezüglich des Auslassbereichs 8 begrenzen. Dieser Steg 28 kann dabei separat vom Einlassbereich 19 hergestellt sein. Der Steg 28 kann insbesondere als Toleranzausgleichselement verwendet werden, um die Positionierung des Turboladers 3 zum Abgassammler 1 zu vereinfachen. Insbesondere ist besagter Steg 28 bereits bei montiertem Abgassammler 2 vorhanden, was beispielsweise aus Fig. 7 hervorgeht. Die dort gezeigte Ansicht auf den Auslassbereich 8 ergibt sich bei fehlendem Turbolader 3.

Bei der hier gezeigten Ausführungsform sind die beiden inneren Schalenkörper 9, 10 im Bereich ihrer Einlassabschnitte 14 fest mit dem Flansch 4 verbunden, insbesondere verschweißt. Der äußere Schalenkörper 5 kann ebenfalls mit dem Flansch 4 direkt verbunden sein, z.B. über entsprechende Schweißnähte. Der äußere Schalenkörper 5 ist im Bereich der Einlassabschnitte 14 fest mit den inneren Schalenkörpern 9, 10 verbunden, insbesondere verschweißt. Dort kann auch die Anbindung an den Flansch 4 erfolgen. Ferner kann der äußere Schalenkörper 5 bei montiertem Turbolader 3 im Bereich seines Auslassbereichs 8 indirekt, nämlich über das Verbindungselement 20 und über den Einlassbereich 19 des Turboladers 3 an den Auslassabschnitten 18 der inneren Schalenkörper 9, 10 abgestützt sein. Grundsätzlich ist auch eine Ausführungsform denkbar, bei welcher der äußere Schalenkörper 5 fest mit dem Flansch 4 verbunden ist. Ebenso kann der äußere Schalenkörper 5 im Bereich der Auslassabschnitte 18 fest mit den inneren Schalenkörpern 9, 10 verbunden sein.

Wie insbesondere aus Fig. 1 hervorgeht, können die beiden inneren Schalenkörper 9, 10 mehrteilig ausgestaltet sein. Beispielsweise umfassen die beiden inneren Schalenkörper 9, 10 als einzelne Bestandteile jeweils drei Einlassrohre 24, die jeweils einen der Einlassabschnitte 14 bilden. Ferner weist jeder innere Schalenkörper 9, 10 ein Verbindungsrohr 25 auf, das das erste und das zweite Einlassrohr 24 über ein Kopplungsrohr 26 mit einem Auslassrohr 27 verbindet. Das jeweilige Auslassrohr 27 verbindet das dritte Einlassrohr 24 und das Verbindungsrohr 25 mit dem jeweiligen Auslassabschnitt 18. Zumindest zwei dieser Bestandteile 24, 25, 26, 27 sind über einen nicht näher bezeichneten Schiebesitz aneinander beweglich gelagert. Hierdurch können thermisch bedingte Dehnungseffekte in der Struktur der inneren Schalenkörper 9, 10 aufgenommen werden. Über diese Schiebesitze kann es zu Leckagen kommen, durch die Abgas vom Inneren des jeweiligen inneren Schalenkörpers 9, 10 in den jeweiligen Teilraum 16, 17 gelangen kann. Gleichzeitig können sich insbesondere über die Schiebesitze auch Druckpulsationen der Abgasströme bis in die Teilräume 16, 17 ausbreiten. Die Trennwand 15 reduziert oder verhindert eine kommunizierende Verbindung zwischen den beiden Teilräumen 16, 17. Dementsprechend sind die beiden Teilräume 16, 17 durch die Trennwand 15 voneinander mehr oder weniger gasdicht getrennt. Insbesondere reduziert die Trennwand 15 Wechselwirkungen aufgrund von Druckpulsationen zwischen dem Abgas des einen inneren Schalenkörpers 9 und dem Abgas des anderen inneren Schalenkörpers 10. Sofern der an den Abgassammler 2 angeschlossene Turbolader 3 als Twin-Scroll-Turbolader ausgestaltet ist, kann die Trennung der Gasströme bis zur Turbine verbessert werden, wodurch das Ansprechverhalten des Turboladers 3 verbessert werden kann.

## Patentansprüche

1. Abgassammler für eine Abgasanlage (1) einer Brennkraftmaschine, insbesondere in einem Kraftfahrzeug,
- mit zwei inneren Schalenkörpern (9, 10), die jeweils mehrere Einlassöffnungen (11) mit einer Auslassöffnung (12) kommunizierend verbinden,
- mit einem äußeren Schalenkörper (5), der einen Aufnahmeraum (13) umhüllt, in dem die beiden inneren Schalenkörper (9, 10) zumindest teilweise angeordnet sind,
- mit einer Trennwand (15), die den Aufnahmeraum (13) in zwei Teilräume (16, 17) unterteilt,
- wobei in jedem der Teilräume (16, 17) einer der beiden inneren Schalenkörper (9, 10) zumindest teilweise angeordnet ist,
**dadurch gekennzeichnet,**
**dass** die Trennwand (15) bezüglich der inneren Schalenkörper (9, 10) beabstandet angeordnet ist.

2. Abgassammler nach Anspruch 1,
**dadurch gekennzeichnet,**
- **dass** der äußere Schalenkörper (5) einen Auslassbereich (8) aufweist, in dem Auslassabschnitte (18) der beiden inneren Schalenkörper (9, 10) mit ihren Auslassöffnungen (12) enden,
- **dass** sich die Trennwand (15) zwischen den Auslassabschnitten (18) bis in den Auslassbereich (8) erstreckt.

3. Abgassammler nach Anspruch 1 oder 2,
**dadurch gekennzeichnet,**
- **dass** der äußere Schalenkörper (5) aus zwei äußeren Schalen (6, 7) zusammengebaut ist,
- **dass** die Trennwand (15) ausschließlich oder zumindest an einer der äußeren Schalen (6, 7) befestigt ist.

4. Abgassammler nach einem der Ansprüche 1 bis 3,
**dadurch gekennzeichnet,**
**dass** der Abgassammler (2) zur Montage an einer Zylinderbank eines Vierzylinder-Reihenmotors oder eines V8-Motors oder eines Sechszylinder-Reihenmotors oder eines Achtzylinder-Reihenmotors oder eines V12-Motors vorgesehen ist.

5. Abgassammler nach einem der Ansprüche 1 bis 4,
**dadurch gekennzeichnet,**
**dass** die Auslassöffnungen (12) der beiden inneren Schalenkörper (9, 10) in einem Auslassbereich (8) des äußeren Schalenkörpers (5) nebeneinander angeordnet sind und insbesondere in einer Ebene liegen.

6. Abgassammler nach einem der Ansprüche 1 bis 5,
**dadurch gekennzeichnet,**
**dass** der Abgassammler (2) als luftspaltisolierter Abgassammler (2) ausgestaltet ist.

7. Abgassammler nach einem der Ansprüche 1 bis 6,
**dadurch gekennzeichnet,**
- **dass** die Einlassöffnungen (11) jeweils an einem Einlassabschnitt (14) des jeweiligen inneren Schalenkörpers (9, 10) ausgebildet sind,
- **dass** der Abgassammler (2) einen Flansch (4) zur Montage des Abgassammlers (2) an der Brennkraftmaschine aufweist.

8. Abgassammler nach Anspruch 7,
**dadurch gekennzeichnet,**
- **dass** die inneren Schalenkörper (9, 10) im Bereich der Einlassabschnitte (14) fest mit dem Flansch (4) verbunden sind, und/oder
- **dass** der äußere Schalenkörper (5) im Bereich der Einlassabschnitte (14) fest mit den inneren Schalenkörpern (9, 10) verbunden ist, und/oder
- **dass** der äußere Schalenkörper (5) im Bereich der Einlassabschnitte (14) fest mit dem Flansch (4) verbunden ist, und/oder
- **dass** der äußere Schalenkörper (5) im Bereich von die Auslassöffnungen (12) aufweisenden Auslassabschnitten (18) der inneren Schalenkörper (9, 10) fest mit den inneren Schalenkörper (9, 10) verbunden ist.

9. Abgassammler nach einem der Ansprüche 1 bis 8,
**dadurch gekennzeichnet,**
**dass** zumindest einer der inneren Schalenkörper (9, 10) mehrteilig ausgestaltet ist, derart, dass wenigstens zwei Bestandteile (24, 25, 26, 27) des jeweiligen inneren Schalenkörpers (9, 10) über einen Schiebesitz aneinander beweglich gelagert sind.

10. Abgasanlage für eine Brennkraftmaschine, insbesondere in einem Kraftfahrzeug,
- mit einem Twin-Scroll-Abgasturbolader (3),
- mit einem am Abgasturbolader (3) befestigten Abgassammler (2) nach einem der Ansprüche 1 bis 9,
- wobei die beiden Auslassöffnungen (12) der inneren Schalenkörper (9, 10) mit zwei Einlassöffnungen (21) des Abgasturboladers (3) kommunizierend verbunden sind, die über getrennte Einlasspfade (22) zur Turbine des Abgasturboladers (3) führen.

## Claims

1. An exhaust gas collector for an exhaust system (1) of an internal combustion engine, in particular in a motor vehicle,
- having two internal shell bodies (9, 10) which each connect a plurality of inlet openings (11) in a communicating fashion to an outlet opening (12),
- having an external shell body (5) which encloses a receptacle space (13) in which the two internal shell bodies (9, 10) are at least partially arranged,
- having a dividing wall (15) which divides the receptacle space (13) into two partial spaces (16, 17),
- one of the two internal shell bodies (9, 10) being at least partially arranged in each of the partial spaces (16, 17),
**characterized in**
**that** the dividing wall (15) is arranged spaced apart from the internal shell bodies (9, 10).

2. The exhaust gas collector as claimed in claim 1,
- wherein the external shell body (5) has an outlet region (8) in which outlet sections (18) of the two internal shell bodies (9, 10) end with their outlet openings (12), and
- wherein the dividing wall (15) extends between the outlet sections (18), as far as the outlet region (8).

3. The exhaust gas collector as claimed in claim 1 or 2,
- wherein the external shell body (5) is assembled from two external shells (6, 7), and
- wherein the dividing wall (15) is attached exclusively or at least to one of the external shells (6, 7).

4. The exhaust gas collector as claimed in one of claims 1 to 3, wherein the exhaust gas collector (2) is provided for mounting on a cylinder bank of a four-cylinder series mounted engine or of a V8 engine or of a six-cylinder series mounted engine or of an eight-cylinder series mounted engine or of a V12 engine.

5. The exhaust gas collector as claimed in one of claims 1 to 4, wherein the outlet openings (12) of the two internal shell bodies (9, 10) are arranged one next to the other in an outlet region (8) of the external shell body (5) and in particular lie in one plane.

6. The exhaust gas collector as claimed in one of claims 1 to 5, wherein the exhaust gas collector (2) is configured as an exhaust gas collector (2) with air gap insulation.

7. The exhaust gas collector as claimed in one of claims 1 to 6,
- wherein the inlet openings (11) are each formed on an inlet section (14) of the respective internal shell body (9, 10), and
- wherein the exhaust gas collector (2) has a flange (4) for mounting the exhaust gas collector (2) on the internal combustion engine.

8. The exhaust gas collector as claimed in claim 7,
- wherein the internal shell bodies (9, 10) are permanently connected to the flange (4) in the region of the inlet sections (14), and/or
- wherein the external shell body (5) is permanently connected to the internal shell bodies (9, 10) in the region of the inlet sections (14), and/or
- wherein the external shell body (5) is permanently connected to the flange (4) in the region of the inlet sections (14), and/or
- wherein the external shell body (5) is permanently connected to the internal shell bodies (9, 10) in the region of outlet sections (18), having the outlet openings (12), of the internal shell bodies (9, 10).

9. The exhaust gas collector as claimed in one of claims 1 to 8, wherein at least one of the internal shell bodies (9, 10) is configured from a plurality of parts, in particular in such a way that at least two components (24, 25, 26, 27) of the respective internal shell body (9, 10) are mounted such that they can move one against the other by means of a sliding fit.

10. An exhaust system for an internal combustion engine, in particular in a motor vehicle,
- having a twin scroll exhaust gas turbocharger (3),
- having an exhaust gas collector (2) as claimed in one of claims 1 to 9 which is attached to the exhaust gas turbocharger (3),
- the two outlet openings (12) of the internal shell bodies (9, 10) being connected in a communicating fashion to two inlet openings (21) of the exhaust gas turbocharger (3), which inlet openings (21) lead to the turbine of the exhaust gas turbocharger (3) via separate inlet paths (22).

## Revendications

1. Collecteur de gaz d'échappement pour une installation d'échappement (1) d'un moteur à combustion interne, en particulier sur un véhicule automobile, comprenant
- deux corps de coque (9, 10) intérieurs, qui relient chacun plusieurs ouvertures d'entrée (11) en communiquant avec une ouverture de sortie (12),
- un corps de coque (5) extérieur, qui enveloppe un espace de logement (13), dans lequel les deux corps de coque (9, 10) intérieurs sont disposés au moins en partie,
- une paroi de séparation (15), qui subdivise l'espace de logement (13) en deux espaces partiels (16, 17),
- l'un des deux corps de coque (9, 10) intérieurs étant disposé au moins en partie dans chacun des espaces partiels (16, 17),
**caractérisé en ce que**
la paroi de séparation (15) est disposée à distance par rapport aux corps de coque (9, 10) intérieurs.

2. Collecteur de gaz d'échappement selon la revendication 1,
**caractérisé en ce que**
- le corps de coque (5) extérieur présente une zone de sortie (8) dans laquelle des tronçons de sortie (18) des deux corps de coque (9, 10) intérieurs se terminent avec leurs ouvertures de sortie (12)
- **en ce que** la paroi de séparation (15) s'étend entre les tronçons de sortie (18) jusque dans la zone de sortie (8).

3. Collecteur de gaz d'échappement selon la revendication 1 ou 2,
**caractérisé en ce que**
- le corps de coque (5) extérieur est constitué de deux coques (6, 7) extérieures,
- **en ce que** la paroi de séparation (15) est fixée exclusivement ou au moins sur l'une des coques (6, 7) extérieures.

4. Collecteur de gaz d'échappement selon l'une quelconque des revendications 1 à 3,
**caractérisé en ce que**
le collecteur de gaz d'échappement (2) est prévu pour le montage sur un banc de cylindres d'un moteur en ligne à quatre cylindres ou d'un moteur V8 ou d'un moteur en ligne à six cylindres ou d'un moteur en ligne à huit cylindres ou d'un moteur V12.

5. Collecteur de gaz d'échappement selon l'une quelconque des revendications 1 à 4,
**caractérisé en ce que**
les ouvertures de sortie (12) des deux corps de coque (9, 10) intérieurs sont disposées les unes à côté des autres dans une zone de sortie (8) du corps de coque (5) extérieur et se situent en particulier dans un plan.

6. Collecteur de gaz d'échappement selon l'une quelconque des revendications 1 à 5,
**caractérisé en ce que**
le collecteur d'échappement (2) est conçu sous forme de collecteur de gaz d'échappement (2) isolé par une fente d'aération.

7. Collecteur de gaz d'échappement selon l'une quelconque des revendications 1 à 6,
**caractérisé en ce que**
- les ouvertures d'entrée (11) sont conçues respectivement sur un tronçon d'entrée (14) du corps de coque (9, 10) intérieur respectif,
- **en ce que** le collecteur d'échappement (2) présente une bride (4) pour le montage du collecteur de gaz d'échappement (2) sur le moteur à combustion interne.

8. Collecteur de gaz d'échappement selon la revendication 7,
**caractérisé en ce que**
- les corps de coque (9, 10) intérieurs sont reliés de façon fixe à la bride (4) dans la zone des tronçons d'entrée (14), et/ou
- **en ce que** le corps de coque (5) extérieur est relié fixement aux corps de coque (9, 10) intérieurs dans la zone des tronçons d'entrée (14) et/ou
- **en ce que** le corps de coque (5) extérieur est relié fixement à la bride (4) dans la zone des tronçons d'entrée (14) et/ou
- **en ce que** le corps de coque (5) extérieur est relié fixement au corps de coque (9, 10) intérieur dans la zone de tronçons de sortie (18), présentant les ouvertures de sortie (12), des corps de coque (9, 10) intérieurs.

9. Collecteur de gaz d'échappement selon l'une quelconque des revendications 1 à 8,
**caractérisé en ce que**
au moins l'un des corps de coque (9, 10) intérieurs est conçu en plusieurs parties de telle sorte qu'au moins deux composants (24, 25, 26, 27) du corps de coque (9, 10) intérieur respectif sont logés de façon mobile l'un par rapport l'autre au moyen d'un siège coulissant.

10. Installation d'échappement pour un moteur à combustion interne, en particulier sur un véhicule automobile, comprenant
- un turbocompresseur à gaz d'échappement Twin-Scroll (3),
- un collecteur de gaz d'échappement (2) fixé sur le turbocompresseur à gaz d'échappement (3) selon l'une quelconque des revendications 1 à 9,
- les deux ouvertures de sortie (12) des corps de coque (9, 10) intérieurs étant reliées en communiquant à deux ouvertures d'entrée (21) du turbocompresseur à gaz d'échappement (3), lesquelles aboutissent par des chemins d'entrée (22) séparés à la turbine du turbocompresseur à gaz d'échappement (3).
